Europäisches Patentamt

European Patent Office

Office européen des brevets

(19)

(11) Publication number: **0 189 240**
**B1**

## (12) EUROPEAN PATENT SPECIFICATION

(45) Date of publication of patent specification:
28.03.90

(21) Application number: 86300045.1

(22) Date of filing: 06.01.86

(51) Int. Cl.⁵: **H 02 G 15/10, H 02 G 15/117**

(54) Splice case.

(30) Priority: 04.01.85 US 688849
01.11.85 US 794948

(43) Date of publication of application:
30.07.86 Bulletin 86/31

(45) Publication of the grant of the patent:
28.03.90 Bulletin 90/13

(84) Designated contracting states:
AT BE CH DE FR GB IT LI NL SE

(56) References cited:
EP—A— 0 108 518
DE—A— 1 939 312
US—A— 3 757 031
US—A— 3 879 575

(73) Proprietor: RAYCHEM CORPORATION (a Delaware corporation)
300 Constitution Drive
Menlo Park, California 94025 (US)

(72) Inventor: Jervis, James E.
495 Walsh Road
Atherton California 94025 (US)

(74) Representative: Benson, John Everett et al
Raychem Limited Intellectual Property Law Department Faraday Road Dorcan
Swindon, Wiltshire SN3 5HH (GB)

## Description

The present invention relates to a splice case for encapsulating a substrate, especially splices between electrical conductors.

It is often desirable to protect substrates from environmental effects such as moisture, a typical example being the protection of a splice between first and second electrical conductors from either water or moisture in air. There are several known methods of protecting substrates, and in particular, electrical conductors, and more particularly, splices between electrical conductors. Such methods include the use of greases and gels surrounding the electrical conductors and the splices. A typical problem with greases is that they lack virtually any three-dimensional structure and hence no elongation and accordingly greases often tend to flow from the area in which they are intended to protect environmentally, especially when subjected to external forces. Though gels, as more particularly described herein, have a three-dimensional network resulting in finite elongation properties which tends to maintain the gel in contact with the substrate being protected even when the gel is placed under an external load, frequently sufficient contact between the substrate being protected and the gel is not maintained over time due to dynamic changes which may occur. Such changes include changes in container sizes utilized to hold the gel due to material creep, changes in volume induced by temperature variations, etc. In addition, prior art methods of protecting substrates generally are not capable of adequately protecting a variety of different-sized substrates using a single apparatus.

EP-A-0108518 discloses an apparatus and method for protection of a substrate, e. g. an electrical contact. The apparatus comprises a support member and an encapsulant which has a cone penetration value of 100 to 350 ($10^{-1}$ mm) and an ultimate elongation of at least 200 %, and preferably an elastic modulus of at least $10^7$ dynes/cm². The encapsulant and the substrate are pressed together so that the encapsulant is deformed into close and conforming contact with the substrate. Preferably at least part of the deformation is elastic deformation.

US 3757031 discloses a protective enclosure for spliced connections comprising a pair of mating members each having a male and female portion of engageable latch means and a highly resilient inner liner wherein the enclosure may be releasably locked about a joint. The liner may be formed of a closed cell sponge rubber or the like. The male and female latch means each comprises teeth disposed adjacent at least one surface thereof to provide interlocking engagement in any one of a number of selective positions.

Accordingly, it is an object of the present invention to provide means for protecting a substrate from the environment.

It is another object of the invention to provide means for encapsulating a substrate, which means protects the substrate from the environment at all times, is easily reenterable, and capable of accommodating any one of a variety of different-sized substrates.

These and other objects are achieved by the provision of a splice case for encapsulating a substrate comprising first and second open containers each containing a sealing material, characterized in that:

(a) each of the first and second containers contains a gel which has a cone penetration value according to ASTM D217 from approximately 100 to 350 ($10^{-1}$ mm), and an ultimate elongation according to ASTM D738 of at least approximately 200 %, an exposed surface of the gel in the first container having a cross-sectional area which exceeds the cross-sectional area of an exposed surface of the gel in the second container, the first and second containers being arranged so as to be capable of telescopically mating such that at least part of the said surfaces are in contact; and

(b) the splice case has biassing means for maintaining the said surfaces biased towards one another.

The use of biassing means, such as a spring, enables the first and second gel surfaces to be maintained in contact; preferably the biassing means exerts a force sufficient to exceed the water pressure which can be expected to be applied externally to the splice case or to be applied along a cable connected to the encapsulated substrate. The splice case can thus be used to reduce, preferably substantially to eliminate, ingress of water onto the encapsulated substrate.

Preferably the biassing means is arranged to be releasable. This enables the splice case to be reentered for service of the encapsulated substrate. The feature of reenterability is particularly attractive since the splice case can be used to provide a temporary seal around a substrate, for example around a partially completed splice between two or more multi conductor cables.

Preferably, the containers are arranged to encapsulate a range of sizes of substrates over a range of expected or dynamic variations, for example, by being capable of relative telescopic movement.

The splice case may be used to encapsulate any of a range of substrates, the nature of the substrate being governed by parameters such as, for example, the size and shape of the containers, the nature of the gel etc. In one embodiment, the splice case is arranged to encapsulate elongate substrates, in particular conductors, and also to encapsulate splices and/or joints between elongate substrates. The conductors may be electrical conductors, for example of a telecommunications cable, fibre-optic conductors or fluid carrying conductors.

When only a portion of a substrate is to be encapsulated by means of the splice case, for example when a splice between elongate conductors is to be encapsulated, the containers of the splice case are arranged to allow the substrate to pass through the container walls, even when the containers are mated. For example, the walls of at least one of the containers may be provided with at least one aperture, for example a hole or a slot.

The gel will be selected according to the nature of the substrate to be encapsulated. For example, when the substrate comprises an electrical conductor or a splice between two such conductors, an electrically insulating gel will be selected, for example, one having a volume resistivity of at least about $10^9$ ohms $cm^{-1}$; when the substrate is susceptible to corrosion it may be appropriate to select a gel which contains a corrosion inhibiting agent. Generally the gel will be selected to be moisture insensitive and substantially inert towards materials with which it will come into contact when in use. The exposed surfaces of the gel are preferably tacky, although a surface layer may be provided to reduce the tackiness of the gel surface temporarily, and thereby reduce contamination for example by dust or grease. For example a net (by which term we include mesh and other foraminous layers) preferably of plastics material is applied to the gel surface. On handling before use, only the surface of the net is touched, which is not tacky; however if pressure is applied to the gel/net surface, gel is forced through the interstices of the net to provide the desired seal. Removal of pressure may allow the gel to return to its previous position allowing the article to be reused. As an alternative to the use of a net, a surface layer may be provided by a particulate material such as small glass or plastic beads. Beads having a diameter of from 0.1 to 10 mm are preferred.

Preferred gels are described in copending European patent application publication no. 108518A, and in US patent applications nos. 434011, 504000, 507433 and 507435 which served as priority applications therefor.

Specifically, the gels d have a cone penetration value from approximately 100 to 350 ($10^{-1}$ mm), preferably between 240 and 330 and most preferably between 270 and 300; an ultimate elongation of at least approximately 200 %; and a cohesive strength greater than an adhesive strength of an exposed surface of the gel to itself or a similar gel. The stated parameters for the cone penetration and elongation are provided in accordance with the American National Standard Designation ASTM D217 and ASTM D738, respectively. A viscous flow of the gel is such that it tends to conform around an outer surface of a substrate suppressed therein, and exerting pressure on the gel increases the degree and quality with which the gel conforms to the substrate. The compositions of the gels in the two containers of the splice case may be identical, or may differ so as to optimise their respective properties. It is particularly preferred, however that the gels be selected such that cohesive strength of each of the gels in the containers exceeds the adhesive strength between the first and second surfaces.

When the splice case is for encapsulating electrical conductors, it is preferred that it comprises means for maintaining the conductors in place in one of the containers, such as for example a split bolt and nut assembly or a double ended split bolt and nut assembly. In another assembly, the splice case may include an organiser for organising individual electrical conductors to facilitate their identification for splicing. In yet another embodiment, there may be provided a terminal block for terminating the electrical conductors.

In another aspect, the invention provides a substrate, at least part of which is encapsulated by the splice case of the invention, the encapsulated substrate being positioned at the interface between the surfaces of the gel in first and second containers.

Thus, a substrate may be encapsulated by a method which comprises:

positioning the substrate between exposed surfaces of a gel which has a cone penetration of from approximately 100 to 350 ($10^{-1}$ mm) and an ultimate elongation of at least approximately 200 %, the gel being contained in respective first and second containers and having different exposed cross-sectional areas;

telescopically mating the first container with the second container such that at least part of the said surfaces are in contact; and

applying means tor biasing the first and second containers towards one another.

Also, a splice case may be provided for encapsulating at least a first and a second conductor comprising:

at least one gel having a cone penetration value from approximately 10 to 350 ($10^{-1}$ mm) and an ultimate elongation of at least approximately 200 %; and

first and second open containers for containing said gel, an exposed first surface of said gel in the first container having a cross-sectional area which exceeds a second cross-sectional area of an exposed second surface of said gel in the second container, said first and second surfaces being adapted for confronting and contacting each other, the first and second containers being sized so as to be capable of telescopically mating in a vicinity of the first and second surfaces.

The splice case may be provided with one or more of the following:

(a) a double-ended split bolt and nut assembly for separating the conductors and holding the electrical conductors in a predetermined position in one of the containers;

(b) means for separating and organising the conductors;

(c) a terminal block for terminating the conductors

(d) biassing means for maintaining the said surfaces biassed towards one another.

Embodiments of the invention will now be described, by way of example, with reference to the accompanying drawings in which :

Figure 1 is a perspective view of a splice case of the invention shown in an open position ;

Figure 2 is a plan view of the splice case shown in Figure 1, in a closed position ;

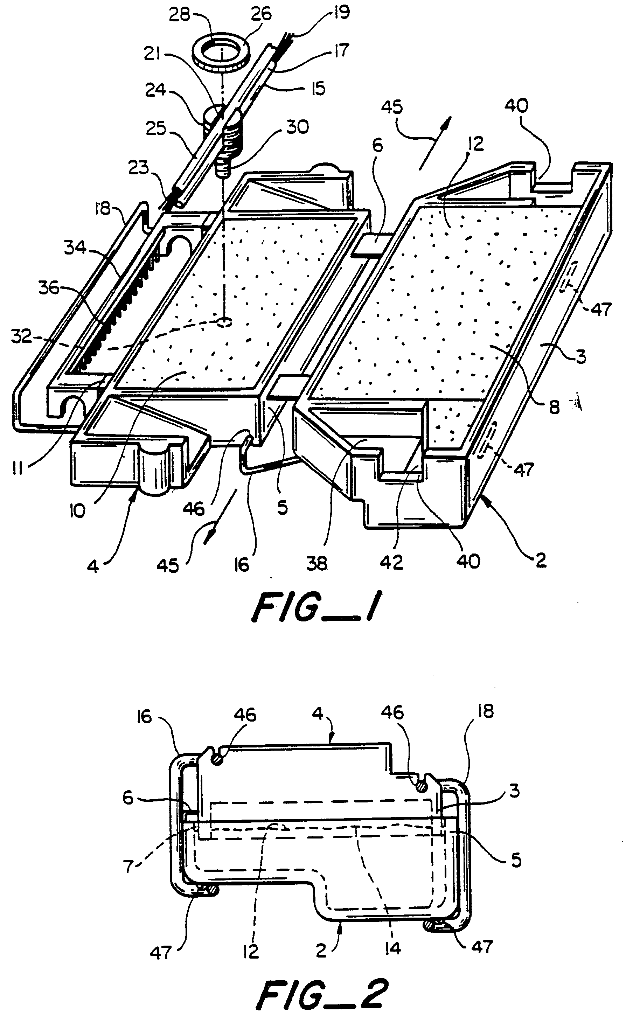

Referring to the drawings, Figure 1 shows a splice case which includes first and second mating containers 2, 4 interconnected by flexible hinge members 6 which allow relative movement between the containers. First and second springs 16, 18 are utilized to maintain the first and second containers in a closed position, as illustrated in Figure 2, the first and second springs being fixedly attached to the second container 4 at points 46 and being releasably connectable to bosses 47 of the first container.

Each container 2, 4 contains a mass of gel 8, 10 which has exposed first and second surfaces 12, 14 respectively which are tacky and hydrolytically stable. The gel is moisture insensitive and substantially inert towards the materials making up the containers 2, 4, as well as conductors 19, 23 and splices therebetween being encapsulated. The gel is further electrically insulating and has a volume resistivity of at least approximately $10^9$ ohms/cm. Such gels can be formed from urethane compositions and silicone compositions as described in the applications cited above. The composition of the gel 8 can be identical to that of the gel 10 or the compositions of the gels 8, 10 can differ so as to optimise the respective properties of the gels so that one gel has a higher cone penetration than the other such that the conductors and splices will tend to be embedded preferentially within one gel over the other. Other variations in the properties between the gels can be optimized as desired.

When the splice case is in an open position as illustrated in Figure 1, a cross-sectional area of the first surface 12 of the gel 8 in the container 2 exceeds a cross-sectional area of the second surface 14 of the gel 10 in the container 4. Accordingly, in a closed position of the splice case, generally illustrated in Figure 2, where the container 4 is rotated about a center line 45 of the hinges 6 so that the surface 14 contacts the gel surface 12, side walls 3, 5 of the containers 2, 4 are capable of a finite amount of telescopic movement when subjected to the bias force of the springs 16, 18. A clearance 7 between the side walls 3, 5 is controlled when forming the containers 2, 4 so as to minimize and control an amount of gel tending to be forced outside the containers. In a preferred embodiment, an elasticity of the gels 8, 10 is determined, and all clearances 7 are sized so as to control the amount of gel tending to escape the containers, and in no case is the gel allowed to escape to such an extent that its maximum elongation is exceeded causing the gel to break, or that all of the finite telescopic movement is utilized.

The springs 16, 18 exert sufficient compression forces between the containers 2, 4 such that the exposed surfaces 12, 14 are maintained in pressure contact regardless of any external factors which may tend to otherwise relieve the pressure, such as (1) deformation of bottom or side surfaces of the containers 2, 4 caused by the pressure induced by material creep, (2) differential expansion and contraction of materials caused by temperature variations, etc. Preferably the springs are constructed so as to maintain a pressure between the surfaces which exceeds any anticipated water pressure to which the splice case or conductor cables 15, 25 may be exposed over the range of telescopic movement. An amount of the telescopic movement available between the containers 2, 4 and the dynamic range of the springs 16, 18 is chosen so that a variety of different-sized substrates can be encapsulated over an entire range of expected or anticipated variations caused by the external factors by using fixed-sized containers and springs, thus making the splice case extremely versatile. Accordingly, water is positively prevented from coming in contact with any contents of the splice case, such as splices embedded in the gel 8, 10. Furthermore, the spring pressure enhances conformance between the gel and the splices, the electrical conductors connected by the splices, and the cables from which the electrical conductors extend.

The splice case advantageously may further include a split bolt 24 and mating nut 26 capable of being interconnected via threads 28. The split bolt includes a pin extension 30, which fits in hole 32 and the container 4 for maintaining the bolt and cables 15, 25 in position relative to the container 4 in use. In addition, if desired, a conductor organizer 34 is attached to the container 4 via second flexible hinges 11, the organizer 34 including a plurality of organizer pins 36.

Openings 40 are sized and tailored so as to closely conform to a size of the cables 15, 25 being spliced so as to minimize escape of gel through the openings 40 the same way as an amount of gel escaping through the clearances 7 is minimized. A reservoir 38 has an exterior slot 42 through which the cables 15, 25 may extend from opposite sides of the splice case.

Use of the splice case of the invention will be described by reference to encapsulating telephone cables having grounding shields 17 thereon and plurality of electrical conductors 19, 23 extending outwards from the cables. As schematically illustrated in Figure 1, the first and second cables 15, 25 are inserted within a slot 21 of the split bolt 24, the cables extending out from the slot in opposite directions, and the nut 26 is threadably engaged with the split bolt via the threads 28 so as tightly to compress the cables 15 against each other thereby providing electrical contact between the grounding shields 17. The wire organizer is then folded over the exposed gel surface and the split bolt 24 is inserted in the gel 10 by inserting the pin extension 30 through the hole 32, fixing the splice into the case. The electrical conductors 19 of the first cable 15 are then organized by utilizing selective ones of the pins 36 of the wire conductor organizer 34, and likewise the electrical conductors 23 of the second cable 25 are organized with similar ones of the pins 36, and desired splices between the electrical conductors 19 and 23 are then made. Thereafter, the container 4 is rotated about the rotation line 45 of the hinges 6 so that the surface 14 contacts the gel surface 12 as generally illustrated in Figure 2, and the containers 2, 4 are maintained in compressive contact via the springs 16, 18 by engagement with the bosses 47. Since the springs 16, 18 exert a « live » compressive force between the surfaces 12, 14 of the gel, and since this compressive force is preferentially maintained higher than any anticipated water pressure to which the splice case and cables will be subjected, the splices, electrical conductors 19, 23 and cables 15, 25 including their shields are protected against moisture and other environmental contaminants regardless of any creep or relaxation of materials making up the containers 2, 4, and changes induced by differential thermal contractions and expansions due to temperature changes of various material forming the splice case, etc., and a well insulated splice case results.

It has been found that the effectiveness of the gel may be enhanced by separating the cables 15, 25 and the conductors 19, 23. This may be accomplished in any of several ways. One way is to provide a double-end split bolt and nuts which together form a split bolt and nut assembly. This split bolt and nut assembly is similar to the split bolt and nut assembly illustrated in Figure 1 except now there are two slots instead of one. Thus, one or more cables is placed in each of its slots. More than two cables are contemplated within the scope of the invention. When the nuts are tightened down on the cases, electrical contact between the cables is maintained through a section of the split bolt.

As can be appreciated, now that the cables are separated, the gel can more easily surround each of the cables so as to avoid more effectively the formation of cavities which can act as conduits for water. Accordingly, environmental protection is assured.

The conductor organizer 34, mentioned previously, may also be used to provide separation of the electrical conductors. However, other means which supply the dual function of separating and organizing are also contemplated within the scope of the invention.

The splice case may also include a terminal block for terminating the electrical conductors. The terminal block may include means for displacing the insulation of the electrical conductors. By use of this terminal block, the electrical conductors are further separated for ease of penetration by the gel. Under certain conditions, it may be desirable to rotate the terminal block 90° so that it would be perpendicular, instead of parallel, to center line 45.

**Claims**

1. A splice case for encapsulating a substrate comprising first and second open containers (2, 4) each containing a sealing material, characterized in that:

(a) each of the first and second containers (2, 4) contains a gel (8, 10) which has a cone penetration value from approximately 100 to 350 $(10^{-1}$ mm), and an ultimate elongation of at least approximately 200 %, an exposed surface (12) of the gel in the first container having a cross-sectional area which exceeds the cross-sectional area of an exposed surface (14) of the gel in the second container, the first and second containers (2, 4) being arranged so as to be capable of telescopically mating such that at least part of the said surfaces are in contact ; and

(b) the splice case has biassing means (16, 18) for maintaining the said surfaces biased towards one another.

2. A splice case as claimed in claim 1, in which the gel has a cone penetration value of from 270 to 300 $(10^{-1}$ mm).

3. A splice case as claimed in claim 1, which further comprises means for holding conductors of the substrate in a predetermined position in one of the containers.

4. A splice case as claimed in claim 3, in which the holding means comprises a double ended split bolt (24) and nut (26) assembly.

5. A splice case as claimed in any one of claims 2 to 4, which further comprises means (34) for organising the conductors.

6. A splice case as claimed in any one of claims 2 to 5, which further comprises a terminal block (60) for terminating the conductors.

7. A splice case as claimed in any one of the preceding claims, in which the cohesive strength of each of the gels in the containers exceeds the adhesive strength between the first and second gel surfaces.

8. A splice case as claimed in any one of the preceding claims, in which the biassing means are releasable so as to allow the first and second containers to be separated from one another.

9. A substrate at least partially encapsulated by a splice case as claimed in any one of the preceding claims, the encapsulated substrate being positioned at the interface between the surfaces of the gel in the first and second containers.

10. A substrate as claimed in claim 9, which comprises at least one splice between at least two electrical conductors.

**Patentansprüche**

1. Spleißgehäuse zum Verkapseln eines Substrats, welches einen ersten und einen zweiten offenen Behälter (2, 4) aufweist, wovon jeder ein Dichtmaterial enthält, dadurch gekennzeichnet, daß

a) sowohl der erste (2) als auch der zweite (4) Behälter ein Gel (8, 10) enthält, das eine Eindringtiefe zwischen rund 160 und 350 $(10^{-1}$ mm) und

eine Gesamtdehnung von mindestens rund 200 % aufweist, wobei eine freiliegende Fläche (12) des Gels im ersten Behälter eine Querschnittsfläche aufweist, die größer als die Querschnittsfläche einer freiliegenden Fläche (14) des Gels im zweiten Behälter ist, und wobei der erste und der zweite Behälter (2, 4) so angeordnet sind, daß sie teleskopartig so ineinanderpassen, daß die Flächen zumindest teilweise miteinander in Kontakt stehen, und

b) daß das Spleißgehäuse eine Spanneinrichtung (16, 18) aufweist, welche die Flächen gegeneinander preßt.

2. Spleißgehäuse nach Anspruch 1, bei welchem das Gel eine Eindringtiefe zwischen 270 und 300 ($10^{-1}$ mm) aufweist.

3. Spleißgehäuse nach Anspruch 1, welches außerdem eine Einrichtung aufweist, die die Leiter in dem Substrat in vorgegebener Lage in einem der Behälter hält.

4. Spleißgehäuse nach Anspruch 3, bei welchem die Halteeinrichtung eine doppelseitige Spannschraube (24) mit Mutter (26) aufweist.

5. Spleißgehäuse nach einem der Ansprüche 2 bis 4, bei welchem weiterhin eine Einrichtung (34) als Hilfsmittel zum Organisieren der Leiter vorgesehen ist.

6. Spleißgehäuse nach einem der Ansprüche 2 bis 5, bei welchem außerdem eine Abschlußklemmleiste (60) für den Abschluß der Leiter vorgesehen ist.

7. Spleißgehäuse nach einem der vorhergehenden Ansprüche, bei welchem die Kohäsionskraft jeder der beiden Gelmassen in den Behältern größer ist als die Klebkraft zwischen der ersten und der zweiten Gelfläche.

8. Spleißgehäuse nach einem der vorhergehenden Ansprüche, bei welchem die Spanneinrichtung lösbar ist, so daß sich der erste und der zweite Behälter voneinander trennen lassen.

9. Substrat, das zumindest teilweise in einem Spleißgehäuse nach einem der vorhergehenden Ansprüche eingeschlossen ist, wobei das eingeschlossene Substrat an der Schnittfläche zwischen den Geloberflächen im ersten und im zweiten Behälter positioniert ist.

10. Substrat nach Anspruch 9, welches einen Spleiß zwischen mindestens zwei elektrischen Leitern umfaßt.

## Revendications

1. Boîte de jonction destinée à enfermer un substrat, comprenant des premier et deuxième récipients ouverts (2, 4) contenant tous les deux une matière d'étanchéité, caractérisée en ce que :

(a) chacun des premier et deuxième récipients (2, 4) contient un gel (8, 10) qui a une valeur de pénétration au cône d'environ 100 à 350 ($10^{-1}$ mm), et un allongement à la rupture d'au moins environ 200 %, une surface libre (12) du gel du premier récipient ayant une aire de section qui est supérieure à l'aire de section d'une surface libre (14) du gel du second récipient, les premier et second récipients (2, 4) étant disposés de manière à pouvoir s'épouser téléscopiquement de telle sorte qu'au moins une partie de ces surfaces sont en contact ; et

(b) la boîte de jonction comporte des moyens de sollicitation pour maintenir les surfaces repoussées l'une vers l'autre.

2. Boîte de jonction selon la revendication 1, dans laquelle le gel a une pénétration au cône de 270 à 300 ($10^{-1}$ mm).

3. Boîte de jonction selon la revendication 1, qui comprend en outre des moyens pour maintenir les conducteurs du substrat dans une position prédéterminée dans l'un des récipients.

4. Boîte de jonction selon la revendication 3, dans laquelle les moyens de maintien comprennent un ensemble vis fendue aux deux extrémités (24) et écrou (26).

5. Boîte de jonction selon l'une des revendications 2 à 4, qui comprend en outre des moyens (34) pour répartir les conducteurs.

6. Boîte de jonction selon l'une des revendications 2 à 5, qui comprend en outre un bloc à bornes (60) pour terminer les conducteurs.

7. Boîte de jonction selon l'une des revendications précédentes, dans laquelle la force de cohésion de chacun des gels contenus dans les récipients est supérieure à la force d'adhérence entre les surfaces des premier et deuxième gels.

8. Boîte de jonction selon l'une des revendications précédentes, dans laquelle les moyens de sollicitation peuvent être relâchés de manière à permettre de séparer le premier récipient et le deuxième récipient l'un de l'autre.

9. Substrat au moins partiellement enfermé par une boîte de jonction selon l'une des revendications précédentes, le substrat enfermé étant placé à l'interface entre les surfaces du gel contenu dans le premier récipient et du gel contenu dans le deuxième récipient.

10. Substrat selon la revendication 9 qui comprend au moins une jonction entre au moins deux conducteurs électriques.

FIG_1

FIG_2

1